# EUROPEAN PATENT APPLICATION

(11) **EP 2 826 654 A1**
(43) Date of publication of application: **21.01.2015**
(21) Application number: 12871195.9
(22) Date of filing: 12.03.2012
(51) Int. Cl.: B60K 6/22, B60K 6/48, B60K 6/547, B60W 10/26, B60W 20/00

(54) **GENERATION CONTROL APPARATUS FOR HYBRID VEHICLE**

(71) Applicant: TOYOTA JIDOSHA KABUSHIKI KAISHA, Toyota-shi, Aichi-ken, 471-8571 (JP)
(72) Inventor: TAKAHASHI, Tomoya, Toyota-shi, Aichi-ken, 471-8571 (JP); TANAKA, Takaaki, Toyota-shi, Aichi-ken, 471-8571 (JP); TABATA, Mitsuhiro, Toyota-shi, Aichi-ken, 471-8571 (JP)
(74) Representative: Albutt, Anthony John
(86) International application number: PCT/JP2012/056299
(87) International publication number: WO 2013/136417

(57) **Abstract**

A power generation control apparatus is applied to a vehicle (lA) which an output shaft (2a) of an internal combustion engine (2) is connected with a rotor shaft (3a) of an MG (3) via a second clutch (21) and the rotor shaft (3a) is connected with an input shaft (11) of a transmission (10) via a manual type first clutch (20). A vehicle control apparatus (30) prompts a driver via a notification apparatus (40), an operation that a shift lever (13) is moved to a neutral position, in a case that: a remaining amount of a battery (4) is equal to or lower than a predetermined determination value; and vehicle speed is equal to or lower than a predetermined determination speed when the transmission (10) is in a state other than a neutral state and the first clutch (20) is in a state other than a release state.

## Description

### Technical Field

The present invention relates to a power generation control apparatus applied to a hybrid vehicle having an internal combustion engine and a motor generator as driving sources for traveling, and being provided with a manual transmission on a power transmission path between the driving sources and drive wheels.

### Background Art

There is known a hybrid vehicle having an internal combustion engine and a motor generator as driving sources for traveling, and powers of the driving sources are transmitted to drive wheels via a manual transmission. For example, there is known a hybrid vehicle where a rotating shaft of the motor generator is connected to an input shaft of the manual transmission via a manual-type clutch which is operated by a clutch pedal, and an output shaft of the internal combustion engine is connected to the rotating shaft via an automatic clutch (see Patent Literature 1) . In addition, there is Patent Literature 2 as a prior art reference in relation to the present invention.

### Citation List

### Patent Literature

Patent Literature 1: JP-2011-183847A
Patent Literature 2: JP-2010-125926A

### Summary of Invention

### Technical Problem

In the vehicle of the Patent Literature 1, the automatic clutch is released when the vehicle is driven by the motor generator. In this case, since the internal combustion engine is separated from the manual transmission, there is a possibility that a driver makes the vehicle park or drive the vehicle at low speed while engaging the manual transmission. In general, in the hybrid vehicle, when a remaining battery power is reduced while the vehicle parks, electric power is generated by driving the motor generator by using the internal combustion engine, and the battery is charged. In the vehicle of the Patent Literature 1, as described above, there is a possibility that the vehicle is parked while engaging the manual transmission. In this case, since the motor generator and the drive wheels are connected with each other, it is impossible to drive the motor generator by using the internal combustion engine. In a case that a generator such as an alternator or the like is provided on the internal combustion engine in addition to the motor generator, and the battery is charged by the generator, the cost increases.

In view of the foregoing, one object of the present invention is to provide a power generation control apparatus for a hybrid vehicle capable of prompting a driver to perform an appropriate operation of the vehicle when it is necessary to charge a battery.

### Solution to Problem

A power generation control apparatus of the present invention is applied to a hybrid vehicle, the hybrid vehicle having a motor generator and an internal combustion engine as driving sources for traveling, and including a manual transmission, a clutch, and a battery, the motor generator functioning as an electric motor and a generator, the manual transmission including: an input shaft which transmits power of the internal combustion engine and power of the motor generator; an output shaft which is connected to a drive wheel so as to transmit power; and plural gear stages being intervened between the input shaft and the output shaft and being set different gear ratios from each other, the manual transmission being allowed to change a gear stage to be used for transmitting rotation between the input shaft and the output shaft, or allowed to switch a state of the manual transmission to a neutral state where a power transmission between the input shaft and the output shaft is shut off, in response to an operation of a shift lever, the clutch being provided in a power transmission path provided between the internal combustion engine and the input shaft of the manual transmission and actuating in response to an operation of stepping on a clutch pedal, and the battery being connected electrically with the motor generator, wherein the power generation control apparatus includes a notification device which prompts a driver to operate at least any one of the shift lever and the clutch pedal so that the internal combustion engine and the motor generator are separated from the drive wheel so as not to transmit power, in a case that: a remaining amount of the battery is equal to or lower than a predetermined determination value; speed of the vehicle is equal to or lower than a predetermined determination speed; and at least any one of the internal combustion engine and the motor generator and the drive wheel are connected with each other so as to transmit power.

When at least any one of the internal combustion engine and the motor generator, and the drive wheel are connected with each other so as to transmit power, the power is transmitted to the drive wheel in a case that the motor generator is driven by the internal combustion engine. Thereby, it is impossible to generate electric power by the motor generator. In the present invention, in this case, the notification device prompts the driver to operate at least any one of the shift lever and the clutch pedal. Thereby, when it is necessary to charge the battery, it is possible to prompt the driver to operate the vehicle appropriately. And, when the driver operates the shift lever or the clutch pedal, the internal combustion engine and the motor generator are separated from the drive wheel so as not to transmit the power. Thereby, it is possible to drive the motor generator by the internal combustion engine.

Accordingly, it is possible to make the motor generator generate the electric power to charge the battery. Furthermore, in the present invention, it is possible to increase an opportunity of the electric power generation when the vehicle is parked. In addition, in the present invention, it is not necessary to provide a generator such as an alternator in addition to the motor generator. Thereby, it is possible to avoid increase in cost.

In one embodiment of the power generation control apparatus of the present invention, an output shaft of the internal combustion engine may be connected with a rotating shaft of the motor generator, the rotating shaft of the motor generator may be connected with the input shaft of the manual transmission via the clutch, and the notification device may prompt the driver to operate at least any one of the shift lever so that the state of the manual transmission is switched to the neutral state and the clutch pedal so that the state of the clutch is switched to a shutoff state where a power transmission between the rotating shaft of the motor generator and the input shaft of the manual transmission is shut off, in a case that: a remaining amount of the battery is equal to or lower than a predetermined determination value; the speed of the vehicle is equal to or lower than a predetermined determination speed; and at least any one of the internal combustion engine and the motor generator and the drive wheel are connected with each other so as to transmit the power. In response to any one of these operations by the driver, it is possible to separate the internal combustion engine and the motor generator from the drive wheel so as not to transmit the power. Thereby, it is possible to make the motor generator generate the electric power.

In one embodiment of the power generation control apparatus of the present invention, a rotating shaft of the motor generator may be connected with the input shaft of the manual transmission, an output shaft of the internal combustion engine may be connected with the rotating shaft of the motor generator via the clutch, and the notification device may prompt the driver to operate the shift lever so that the state of the manual transmission is switched to the neutral state, in a case that: a remaining amount of the battery is equal to or lower than a predetermined determination value; the speed of the vehicle is equal to or lower than a predetermined determination speed; and at least any one of the internal combustion engine and the motor generator and the drive wheel are connected with each other so as to transmit the power. In response to the operation to the shift lever by the driver, it is possible to separate the internal combustion engine and the motor generator from the drive wheel so as not to transmit the power. Thereby, it is possible to make the motor generator generate the electric power.

### Brief Description of Drawings

Fig. 1 is a schematic diagram showing main portions of a vehicle where a power generation control apparatus according to a first embodiment of the present invention is incorporated.
Fig. 2 is a diagram showing a shift pattern of a transmission.
Fig. 3 is a flowchart showing a power generation control routine executed by a vehicle control apparatus.
Fig. 4 is a schematic diagram showing main portions of a vehicle where a power generation control apparatus according to a second embodiment of the present invention is incorporated.

### Description of Embodiments

### (First Embodiment)

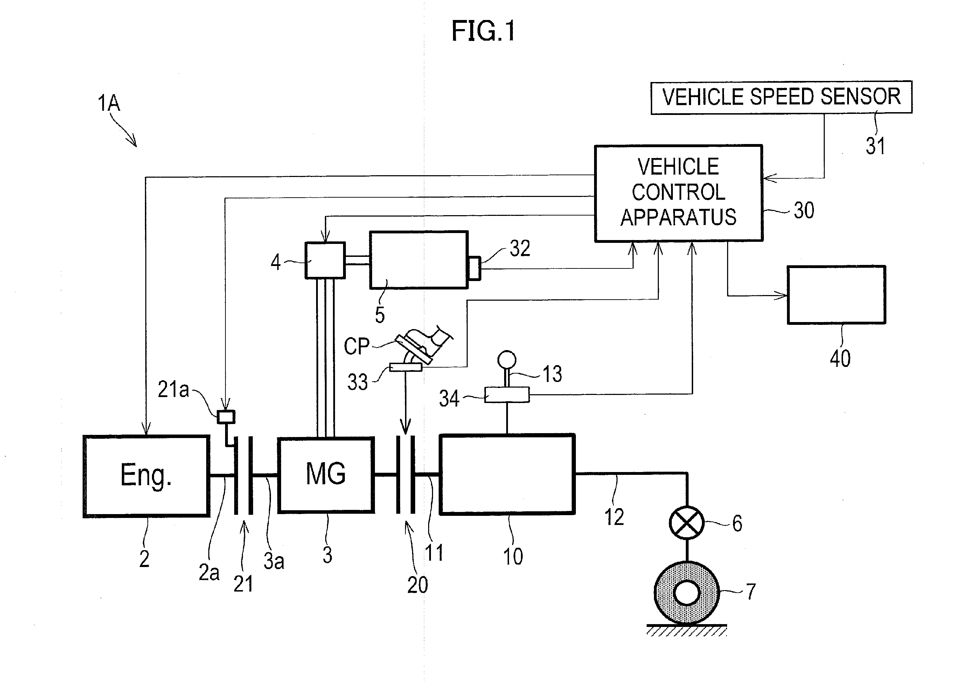

Fig. 1 schematically shows main portions of a vehicle where a power generation control apparatus according to a first embodiment of the present invention is incorporated. The vehicle 1A includes an internal combustion engine (hereinafter, referred to as an engine) 2 and a motor generator (hereinafter, referred to as an MG) 3, as driving sources for travelling. That is, the vehicle 1A is configured as a hybrid vehicle. The engine 2 is a well-known spark ignition type internal combustion engine which is mounted on the hybrid vehicle. The MG 3 is a well known motor generator which functions as an electric motor and a generator, and is mounted on the hybrid vehicle. The MG 3 includes a rotor shaft 3a as a rotating shaft. The MG 3 is connected electrically to a battery 5 via an inverter 4.

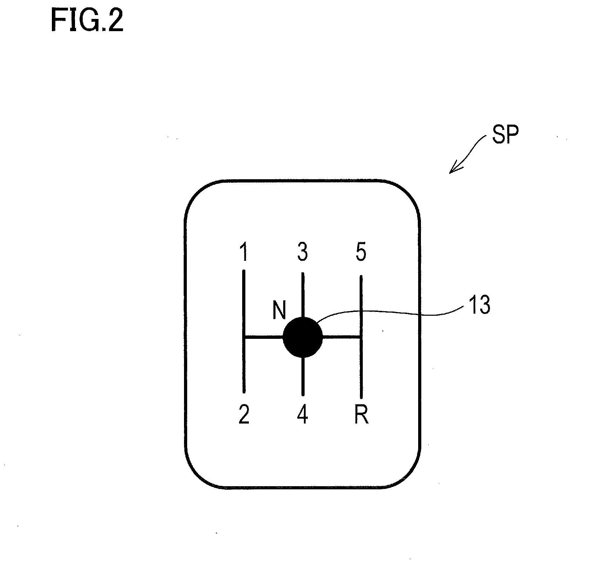

Furthermore, a transmission 10 is mounted on the vehicle 1A. The transmission 10 is configured as a manual transmission providing one-five forward gear stages and one reverse gear stage. The transmission 10 includes an input shaft 11 and an output shaft 12. Gear pairs (not shown) which correspond to first gear to fifth gear are provided between the input shaft 11 and the output shaft 12. Gear ratios are set to the gear pairs respectively, so that the gear ratios are different from each other. The gear ratios are set so as to get smaller in the order of the gear pair of the first gear, the gear pair of the second gear, the gear pair of the third gear, the gear pair of the fourth gear, and the gear pair of the fifth gear. The transmission 10 is configured so as to establish a transmission of rotation selectively by any one of the gear pairs. The transmission 10 includes a shift lever 13 which is operated by a driver. Fig. 2 shows a shift pattern SP of the transmission 10. The driver operates the shift lever 13 according to the shift pattern SP. By the operation, the gear pair which is used for the transmission of rotation between the input shaft 11 and the output shaft 12 is changed, and the gear stage is changed. Furthermore, the transmission 10 is configured so as to be allowed to change its state into a neutral state where the transmission of rotation between the input shaft 11 and the output shaft 12 is shut off. When the shift lever 13 is operated to a neutral position N, the state of the transmission 10 is changed to the neutral state. A structure of the transmission 10 is the same as a structure of a well known manual transmission which is mounted on a vehicle. Thereby, a detailed description of the structure of the transmission 10 will be omitted.

As shown in Fig. 1, the input shaft 11 of the transmission 10 is connected with the rotor shaft 3a of the MG 3 via a first clutch 20. The first clutch 20 is a well known friction clutch. The first clutch 20 is configured so as to be allowed to switch its state between a fully engaged state where the input shaft 11 and the rotor shaft 3a rotate integrally with each other and a release state where the input shaft 11 and the rotor shaft 3a are separated from each other. Furthermore, the first clutch 20 is allowed to switch its state to a half clutch engaged state (hereinafter, referred to as a half clutch) where a power is transmitted between the rotor shaft 3a and the input shaft 11 while the rotor shaft 3a and the input shaft 11 rotate at different rotating speeds from each other. The first clutch 20 is operated by a clutch pedal CP. When the clutch pedal CP is stepped on, the state of the first clutch 20 is switched to the release state. When the clutch pedal CP is released, the state of the first clutch 20 is switched to the fully engaged state. Furthermore, when the clutch pedal CP is partially stepped on, the state of the first clutch 20 is switched to the half clutch. The relation between the clutch pedal CP and the state of the first clutch 20 is the same as the relation of a well known manual clutch. Thereby, a detailed description of the relation between the first clutch 20 and the clutch pedal CP will be omitted. The first clutch 20 corresponds to a clutch of the present invention.

The rotor shaft 3a of the MG 3 is connected with the output shaft 2a of the engine 2 via a second clutch 21. The second clutch 21 is also a well known friction clutch. The second clutch 21 is configured so as to be allowed to switch its state between an engaged state where the output shaft 2a and the rotor shaft 3a rotate integrally and a release state where the output shaft 2a and the rotor shaft 3a are separated from each other. The second clutch 21 includes an actuator 21a for switching the state of the second clutch 21. As described above, the second clutch 21 is configured as an automatic clutch.

The output shaft 12 of the transmission 10 is connected with a differential mechanism 6. The differential mechanism 6 is a well known mechanism which distributes inputted power to the right and left drive wheels 7. In this figure, only one of the drive wheels 7 is shown.

Each operation of the engine 2, the MG 3, and the second clutch 21 is controlled by a vehicle control apparatus 30. The vehicle control apparatus 30 is configured as a computer unit including a microprocessor and peripheral devices, such as a RAM and a ROM, which are necessary for the operations of the microprocessor. The vehicle control apparatus 30 holds various control programs for making the vehicle 1A run appropriately. The vehicle control apparatus 30 controls control objects such as the engine 2 and the MG 3 by executing these programs. The vehicle control apparatus 30 controls the operation of the MG 3 by controlling the inverter 4. The vehicle control apparatus 30 is connected with various sensors for obtaining information with respect to the vehicle 1A. The vehicle control apparatus 30 is connected with a vehicle speed sensor 31, a state of charge sensor (an SOC sensor) 32, a clutch release sensor 33, and a neutral sensor 34, for example. The vehicle speed sensor 31 outputs a signal corresponding to speed of the vehicle 1A (vehicle speed). The SOC sensor 32 outputs a signal corresponding to a remaining amount of the battery 5. The clutch release sensor 33 outputs a signal when the clutch pedal CP has been stepped on up to a predetermined position where the state of the first clutch 20 is switched to the release state. On the other hand, the clutch release sensor 33 stops outputting the signal when the clutch pedal CP has not been stepped on up to the predetermined position. The neutral sensor 34 outputs a signal when the shift lever 13 is in the neutral position N. On the other hand, the neutral sensor 34 stops outputting the signal when the shift lever 13 is in a position other than the neutral position N. In addition, various sensors are further connected to the vehicle control apparatus 30, but they are omitted in the figure.

As shown in Fig. 1, the vehicle 1A is provided with a notification apparatus 40 for notifying the driver of information and warning. At least any one of a monitor, a speaker, and a lamp is provided as the notification apparatus 40. The notification apparatus 40 is also connected to the vehicle control apparatus 30.

The vehicle control apparatus 30 determines that it is necessary to charge the battery 5 when the remaining amount of the battery 5 is equal to or lower than a predetermined determination value. In this case, the vehicle control apparatus 30 controls the MG 3 so as to function as the generator. Then, the vehicle control apparatus 30 connects the engine 2 and the MG 3 by switching the state of the second clutch 21 to the engaged state. Thereafter, the vehicle control apparatus 30 drives the MG 3 by the engine 2, and charges generated electric power to the battery 5. In this case, when an accelerator pedal is stepped on, the vehicle control apparatus 30 adjusts the output power of the engine 2 so that the drive wheels 7 are driven at drive power that the driver requires. Hereinafter, these controls are referred to as a power generation control.

In the vehicle 1A, in a case that the power generation control is executed when the vehicle 1A is parked, it is necessary that the transmission 10 is in the neutral state or the first clutch 20 is in the release state so that the power of the engine 2 and the power of the MG 3 are not transmitted to the drive wheels 7. However, the vehicle control apparatus 30 cannot control the transmission 10 and the first clutch 20. So, the vehicle control apparatus 30 notifies the driver from the notification apparatus 40 to operate at least any one of the transmission 10 and the first clutch 20. And, the vehicle control apparatus 30 executes the above power generation control when the transmission 10 goes into the neutral state or the first clutch 20 goes into in the release state.

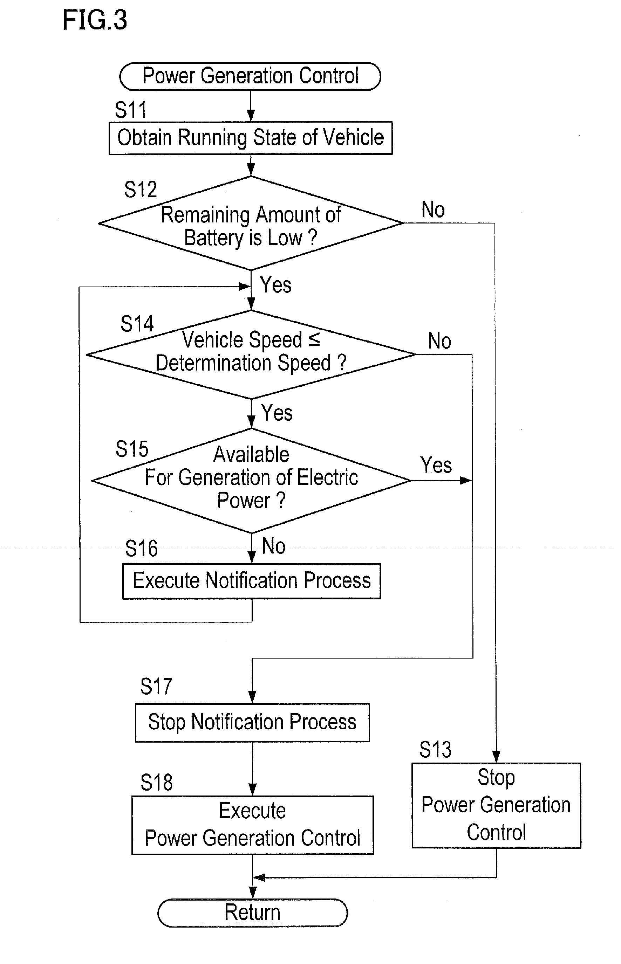

Fig. 3 shows a power generation control routine which the vehicle control apparatus 30 executes for executing the above power generation control. The vehicle control apparatus 30 repeatedly executes this control routine at predetermined intervals regardless of the running state of the vehicle 1A. Furthermore, the vehicle control apparatus 30 executes this routine in parallel to the other routines executed by the vehicle control apparatus 30.

In this control routine, the vehicle control apparatus 30 first obtains the running state of the vehicle 1A in step S11. The vehicle control apparatus 30 obtains the vehicle speed and the remaining amount of the battery 5 as the running state of the vehicle 1A. In the next step S12, the vehicle control apparatus 30 determines whether or not the remaining amount of the battery 5 is low. As described above, the vehicle control apparatus 30 determines that the remaining amount of the battery 5 is low, when the remaining amount of the battery 5 is equal to or lower than the determination value. The determination value may be set appropriately depending on a capacity of the battery 5, for example. When the vehicle control apparatus 30 determines that the remaining amount of the battery 5 is high, the vehicle control apparatus 30 goes to step S13 and stops the above power generation control. After stopping the power generation control, the vehicle control apparatus 30 controls the engine 2, the MG 3, and the second clutch 21 appropriately depending on an accelerator opening degree and so on. Thereafter, the vehicle control apparatus 30 ends the present control routine.

On the other hand, when the vehicle control apparatus 30 determines that the remaining amount of the battery 5 is low, the vehicle control apparatus 30 goes to step S14 and determines whether or not the vehicle speed is equal to or lower than a predetermined determination speed. The determination speed is set as a criterion for determining whether or not it is necessary to drive the drive wheels 7 by the engine 2 or the MG 3. As the determination speed a few kilometers per hour is set, for example. When determining that the vehicle speed is equal to or lower than the determination speed, the vehicle control apparatus 30 goes to step S15 and determines whether or not the vehicle 1A is available for generation of electric power by driving the MG 3 by the engine 2. As described above, if the power of the engine 2 and the power of the MG 3 are transmitted to the drive wheels 7 in a state that the vehicle 1A is parked, it is impossible for the MG 3 to generate electric power. Thereby, the vehicle control apparatus 30 determines that the vehicle 1A is available for generation of electric power when the transmission 10 is in the neutral state or the first clutch 20 is in the release state. Accordingly, when the transmission 10 is in a state other than the neutral state and the first clutch 20 is in the fully engaged state or the half clutch, the vehicle control apparatus 30 determines that the vehicle 1A is unavailable for generation of electric power. The vehicle control apparatus 30 may make a determination based on the output signal of the clutch release sensor 33 and the output signal of the neutral sensor 34, for example.

When determining that the vehicle 1A is unavailable for generation of electric power, the vehicle control apparatus 30 goes to step S16 and executes a notification process. In the notification process, a notification is issued from the notification apparatus 40 to the driver for making the driver to operate the shift lever 13 to the neutral position. In particular, in a case that a monitor is provided as the notification apparatus 40, for example, a message that "Please move the shift lever to the neutral position" is displayed on the monitor. When a speaker is provided as the notification apparatus 40, the above message is notified by voice. Furthermore, the notification may be issued a notification sound instead of such message. When a lamp is provided as the notification apparatus 40, the notification is issued to the driver by putting on the lamp. Thereafter, the vehicle control apparatus 30 returns to the step S14. By notifying the driver in this manner, the vehicle control apparatus 30 and the notification apparatus 40 correspond to the notification device of the present invention.

When the determination in the step S14 is negative or the determination in the step S15 is affirmative, the vehicle control apparatus 30 goes to step S17 and stops the notification process. In the next step S18, the vehicle control apparatus 30 executes the power generation control. Thereafter, the vehicle control apparatus 30 ends the present control routine.

As described above, in the first embodiment, in a case that the transmission 10 is in the state other than the neutral state and the first clutch 20 is in the fully engaged state or the half clutch when the remaining amount of the battery 5 is equal to or lower than the determination value and the vehicle speed is equal to or lower than the determination speed, the notification process is executed. Thereby, it is possible to prompt the driver to move the shift lever 13 to the neutral position. And, in the result, since the power generation control is executed when the shift lever 13 has been moved to the neutral position, it is possible to charge the battery 5. In this manner, according to the present invention, it is possible to increase an opportunity of the electric power generation when the vehicle 1A is parked. Furthermore, it is not necessary to provide a generator such as an alternator on the engine 2 in addition to the MG 3. Thereby, it is possible to avoid increase in cost.

Furthermore, in the first embodiment, only the notification to the driver is executed, and the transmission 10 does not go into the neutral state automatically or the first clutch 20 does not go into the release state automatically. Thereby, after that, when the driver steps on the accelerator pedal, it is possible to prevent delay in the response of the vehicle 1A to the operation of the driver. Accordingly, the driver is not made to feel a feeling of strangeness.

In the first embodiment, it is possible to execute the power generation control when the first clutch 20 is in the release state even though the transmission 10 is in the state other than the neutral state. Thereby, in the notification process, a message that "Please step on the clutch pedal" may be issued instead of the message that "Please move the shift lever to the neutral position". Furthermore, both messages may be issued. Thereby, the release state of the first clutch 20 corresponds to a shutoff state of a clutch of the present invention.

In the first embodiment, the second clutch 21 is not limited to the friction clutch. The second clutch 21 may be any kind of clutch as long as the clutch is at least able to connect and disconnect the power transmission between the output shaft 2a of the engine 2 and the rotor shaft 3a of the MG 3. Thereby, the second clutch 21 may be an electromagnetic clutch or a dog clutch, for example.

### (Second Embodiment)

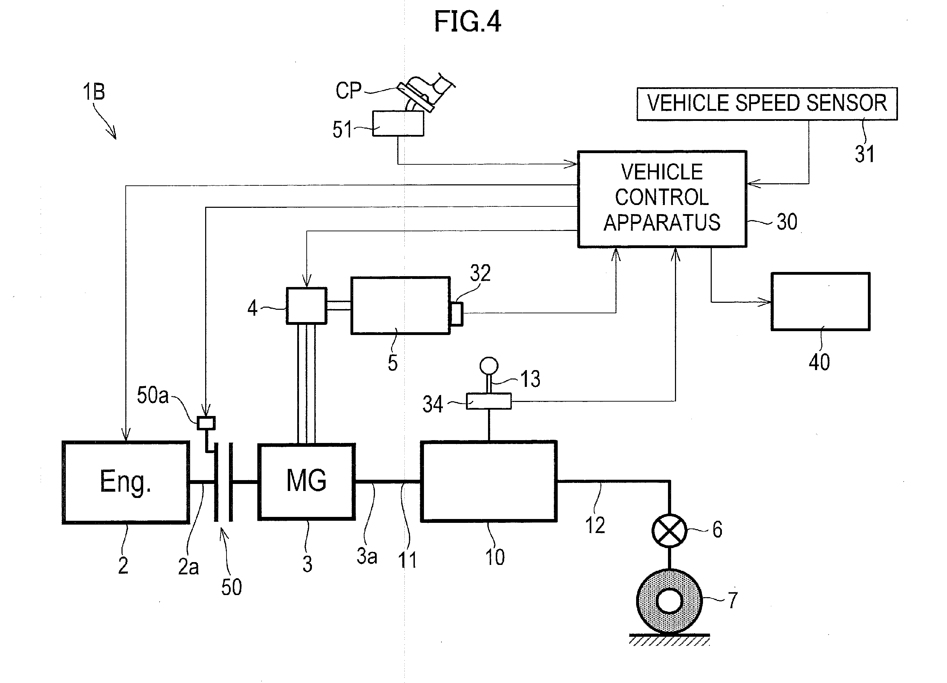

Next, a power generation control apparatus according to a second embodiment of the present invention will be described with reference to Fig. 4. This figure schematically shows main portions of a vehicle 1B where a power generation control apparatus according to the second embodiment of the present invention is incorporated. In the figure, the same components as those in Fig. 1 are denoted by the same reference numerals, and descriptions thereof will be omitted. As shown in the figure, in the vehicle 1B, the input shaft 11 of the transmission 10 and the rotor shaft 3a of the MG 3 are connected so as to rotate integrally.

A clutch 50 is provided between the output shaft 2a of the engine 2 and the rotor shaft 3a of the MG 3. The clutch 50 is configured as a well known friction clutch. As with the above described second clutch 21, the clutch 50 is configured so as to be allowed to switch its state between the engaged state where the output shaft 2a and the rotor shaft 3a rotate integrally and the release state where the output shaft 2a and the rotor shaft 3a are separated from each other. Furthermore, the clutch 50 is also configured so as to be allowed to switch its state to the half clutch. The clutch 50 is provided with an actuator 50a for switching the state of the clutch 50. The clutch pedal CP is provided with a clutch pedal sensor 51. The clutch pedal sensor 51 outputs a signal corresponding to an operation amount to the clutch pedal CP. The clutch pedal sensor 51 is connected with the vehicle control apparatus 30. Basically, the vehicle control apparatus 30 controls the actuator 50a based on the output signal of the clutch pedal sensor 51. As needed for operating the vehicle 1B, the vehicle control apparatus 30 controls the actuator 50a regardless of the output signal of the clutch pedal sensor 51. In this way, the clutch 50 is controlled by a so-called clutch-by-wire system. In this embodiment, the clutch 50 corresponds to the clutch of the present invention.

Also in this embodiment, the vehicle control apparatus 30 executes the power generation control. As shown apparently in Fig. 4, also in the vehicle 1B, it is necessary that the transmission 10 is in the neutral state in a case that the power generation control is executed when the vehicle 1B is parked. Thereby, also in the embodiment, the power generation control routine of Fig. 3 is executed. In the embodiment, the rotor shaft 3a of the MG 3 and the input shaft 11 of the transmission 10 are connected with each other. Thereby, in the step S15, only when the state of the transmission 10 is switched to the neutral state, the vehicle control apparatus 30 determines that the vehicle 1B is available for generation of electric power. Furthermore, in the notification process of the step S16, the vehicle control apparatus 30 issues a notification to the driver so as to make the driver move the shift lever 13 to the neutral position.

In this embodiment, in a case that the transmission 10 is in the state other than the neutral state when the remaining amount of the battery 5 is equal to or lower than the determination value and the vehicle speed is equal to or lower than the determination speed, the notification process is executed. Thereby, it is possible to prompt the driver to move the shift lever 13 to the neutral position. Accordingly, it is possible to increase the opportunity of the electric power generation when the vehicle 1B is parked.

The present invention is not limited to the above-described embodiments, and various modifications of the present invention may be provided. For example, the transmission of the vehicle to which the present invention is applied is not limited to a transmission the top gear of which is a 5th gear. The transmission may be a transmission the top gear of which is a 4th gear or less, or 6th gear or more, for example.

## Claims

1. A power generation control apparatus which is applied to a hybrid vehicle,
the hybrid vehicle having a motor generator and an internal combustion engine as driving sources for traveling, and including a manual transmission, a clutch, and a battery,
the motor generator functioning as an electric motor and a generator,
the manual transmission including:
an input shaft which transmits power of the internal combustion engine and power of the motor generator;
an output shaft which is connected to a drive wheel so as to transmit power; and
plural gear stages being intervened between the input shaft and the output shaft and being set different gear ratios from each other,
the manual transmission being allowed to change a gear stage to be used for transmitting rotation between the input shaft and the output shaft, or allowed to switch a state of the manual transmission to a neutral state where a power transmission between the input shaft and the output shaft is shut off, in response to an operation of a shift lever,
the clutch being provided in a power transmission path provided between the internal combustion engine and the input shaft of the manual transmission and actuating in response to an operation of stepping on a clutch pedal, and
the battery being connected electrically with the motor generator, wherein
the power generation control apparatus includes a notification device which prompts a driver to operate at least any one of the shift lever and the clutch pedal so that the internal combustion engine and the motor generator are separated from the drive wheel so as not to transmit power, in a case that: a remaining amount of the battery is equal to or lower than a predetermined determination value; speed of the vehicle is equal to or lower than a predetermined determination speed; and at least any one of the internal combustion engine and the motor generator and the drive wheel are connected with each other so as to transmit power.

2. The power generation control apparatus according to claim 1, wherein
an output shaft of the internal combustion engine is connected with a rotating shaft of the motor generator,
the rotating shaft of the motor generator is connected with the input shaft of the manual transmission via the clutch, and
the notification device prompts the driver to operate at least any one of the shift lever so that the state of the manual transmission is switched to the neutral state and the clutch pedal so that the state of the clutch is switched to a shutoff state where a power transmission between the rotating shaft of the motor generator and the input shaft of the manual transmission is shut off, in a case that: a remaining amount of the battery is equal to or lower than a predetermined determination value; the speed of the vehicle is equal to or lower than a predetermined determination speed; and at least any one of the internal combustion engine and the motor generator and the drive wheel are connected with each other so as to transmit the power.

3. The power generation control apparatus according to claim 1, wherein
a rotating shaft of the motor generator is connected with the input shaft of the manual transmission,
an output shaft of the internal combustion engine is connected with the rotating shaft of the motor generator via the clutch, and
the notification device prompts the driver to operate the shift lever so that the state of the manual transmission is switched to the neutral state, in a case that: a remaining amount of the battery is equal to or lower than a predetermined determination value; the speed of the vehicle is equal to or lower than a predetermined determination speed; and at least any one of the internal combustion engine and the motor generator and the drive wheel are connected with each other so as to transmit the power.
